# EUROPEAN PATENT APPLICATION

(11) **EP 1 630 924 A2**
(43) Date of publication of application: **01.03.2006**
(21) Application number: 05016972.1
(22) Date of filing: 04.08.2005
(51) Int. Cl.: H02H 5/04, B60Q 11/00, B60R 16/02

(54) **Thermal optical circuit interruption system**

(30) Priority: 30.08.2004 US 929998
(71) Applicant: International Truck Intellectual Property Company, LLC., Warrenville, IL 60555 (US)
(72) Inventor: Aboyade, Oj, Fort Wayne IN 46835 (US); Bradley, James, New Haven IN 46774 (US); Klinger, Rodney, Fort Wayne IN 46835 (US); Marshall, Brian, + (US)
(74) Representative: Kuhnen & Wacker

(57) **Abstract**

Electrical circuits are interrupted in response to temperature transients of the electrical conductors bf the circuit. Temperature excursions are sensed using a thermo optical device. The circuit interruption device may be the same element as the circuit switching element.

## Description

### BACKGROUND OF THE INVENTION

### 1. Technical Field:

The invention relates to electrical circuit protection systems and more particularly to a fail safe circuit interruption system for motor vehicles employing thermal optical fault detection.

### 2. Description of the Problem:

Wiring for carrying electrical current is subject to overcurrent conditions which may be the result of short circuits or of excessive loads being connected into a circuit including the wiring. Conventionally, protection is provided by positioning a fuse or circuit breaker in the circuit. A fuse tends to be stable even in high ambient temperature conditions and responds quickly and completely when it functions. Fuses are highly reliable, but must be replaced after a circuit opening event. Circuit breakers typically come in one of two types, magnetic and thermal. The magnetic systems are the more reliable, but tend to be bulky and are not cost effective for motor vehicle applications. Thermal breakers are the type familiar to most users but tend to be vulnerable to ambient heat and are further vulnerable to mechanical failure. Circuit breakers can be reset after use and have been favored for use in trucks for that reason.

Circuit breakers used in motor vehicle applications have proven less reliable than desired. Automotive and truck applications are frequently hostile or difficult environments. Circuit breakers are often located in the engine compartment under the motor vehicle hood where they are subjected to overheating from sources other than electrical wiring. Another favored location for circuit breakers is under or in the motor vehicle's dash, which, while less hostile than the engine compartment can suffer from poor ventilation. The dash is more vulnerable to damage in case of failure of the breakers than are components located under the hood.

An overloaded circuit can generate an amount of heat exceeding what the wiring, insulation covering the wiring, or the environment of use can tolerate. Failure of the wiring or damage to the circuit components may be indicated by an excursion of the wire's temperature above a threshold temperature. It may also be indicated by a prolonged period above a second, lower temperature. The potential for failure may also be indicated by an upward spike in wire temperature, even if the wire's temperature has yet to exceed any of the thresholds. Temperature spikes may be associated with a circuit fault or short circuit.

### SUMMARY OF THE INVENTION

According to the invention there is provided an electrical power system for a motor vehicle. The electrical system comprises a plurality of electrical loads, electrical conductors connected to the plurality of electrical loads to form a circuits, circuit interruption devices connected into the electrical conductors and responsive to cutoff signals for opening the respective circuits, at least a first infrared optical sensor disposed with respect to an electrical conductor for measuring the temperature thereof and generating a signal proportional to the temperature, and a body computer or equivalent data processing device coupled to receive the proportional signal and responsive thereto for generating a cutoff signal for application to the circuit interruption device. The body computer is programmed to generate the cutoff signal if the proportional signal indicates that the temperature has exceeded a never exceed temperature, if the proportional signal indicates a rapid upward change in temperature, or if the temperature of the electrical conductor exceeds a predetermined threshold for longer that a minimum time period, the predetermined threshold being lower than the never exceed temperature.

Additional effects, features and advantages will be apparent in the written description that follows.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
**Fig. 1** is a perspective view of a tractor and trailer combination with which the present invention can be practiced;
**Fig. 2** is a block diagram of a vehicle controller area network used in a preferred embodiment;
**Fig. 3** is a high level circuit schematic of an electronic gauge controller, an electrical system controller and a plurality of lamps energized under the control of the electrical system controller;
**Figs. 4A** and **B** are schematics of implementations of the invention utilizing FET switching and relay switching, respectively;
**Fig. 5** is a block diagram of a modular light switch unit incorporating a thermal sensor; and
**Fig. 6** is a high level flow chart illustrating response of the system to fault indicating events.

### DETAILED DESCRIPTION OF THE INVENTION

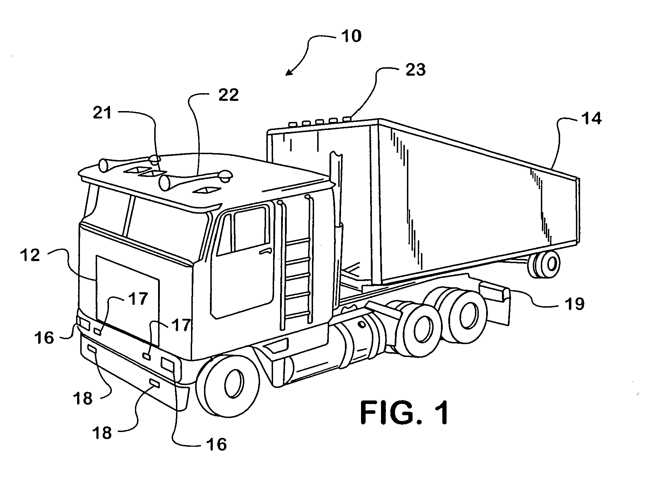

**Fig. 1** illustrates in a perspective view a truck **10** comprising a combination of a tractor **12** and a trailer **14.** Tractor **12** includes the conventional major systems of a vehicle, including an engine, a starter system for the engine, brakes, a transmission and various lamps. Tractor **12** and trailer **14** mount several exterior lamps by which the vehicle provides light for its driver to see by and means to be seen, particularly at night, by others. On the front of tractor **12** are headlights **16,** front corner turn signal lamps **17,** and fog lamps **18.** Several identification lights **21** are installed on the roof of tractor **12.** A lamp box **19** installed on the rear end of tractor **12** carries additional turn signal lights, reverse lights and brake lights. As is common, the forward and tail end turn signal lights have a hazard function and can be cycled on and off together (generally the forward pair together and then the tail end pair together) to provide warning to passing motorists. A pair of electrically activated horns **22** are installed on the roof of tractor **12.** Trailer **14** also carries various lights, including tail end brake and turn signal lamps (not shown), as well as identification lights **23** which may be positioned any where on the trailer, but are commonly found on upper and lower edges of the trailer. All of the various lamps are electrified by delivery of current to the lamps by electrical wires and may be taken as exemplary of the various systems of truck **10** which require electrical power. The invention will be explained with reference to lighting systems, its preferred application, but those skilled in the art will appreciate its general applicability to other vehicle electrical systems.

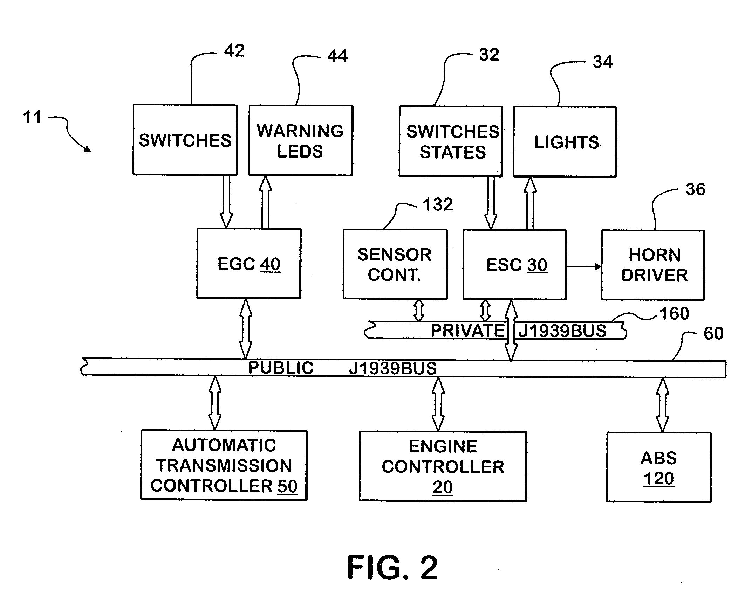

Referring now to **Fig. 2,** tractor **12** includes a network **11** based on an electrical system controller (ESC) **30** and including first and second shielded, twisted pair busses **60, 160** over which data communications between ESC **30** and other controllers occur. Busses **60** and **160** conform to the SAE J1939 standard with bus **60** being a public bus and bus **160** being proprietary. ESC **30** executes the programming used to implement the preferred embodiment of the invention. Among other vocational controllers and sensor interface modules which may be connected to public bus **60** are an automatic transmission controller **50,** an engine controller **20** and an anti-lock brake system **120.** A thermal sensor data transmitter **132** is connected for communication with ESC **30** over private bus **160.** Busses **60** and **160,** along with the various nodes attached thereto form controller area networks (CAN).

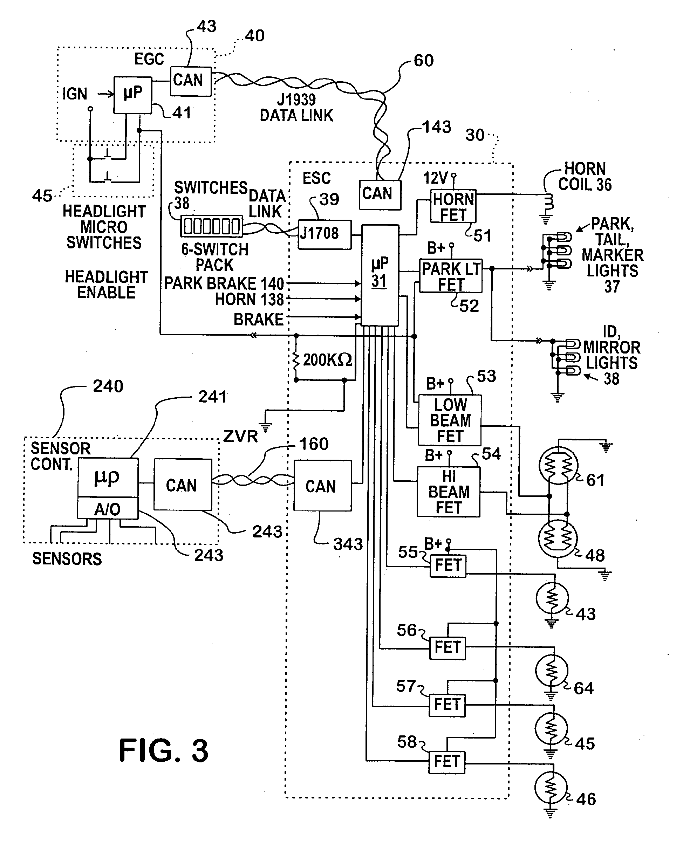

Active vehicle components are typically controlled by one of a group of autonomous, vocational controllers. However, most lamps are powered directly from ESC **30,** which includes a number of power field effect transistors (FETs) for that purpose. A switch set **42** for the lamps is attached to electrical gauge controller (EGC). **40,** which communicates requests to illuminate lamps to ESC **30** over bus **60.** A panel display including a plurality of warning LEDs **44** is connected to and under the control of EGC **40.** ESC **30** additionally drives horn transducers **36** mounted in the horns **22** on top of tractor **12.** ESC **30** includes a programmable computer including conventional memory (both volatile and non-volatile) and the capability for program execution (CPU **31,** see **Fig. 3**).

**Fig. 3** is a high level circuit schematic of EGC **40,** ESC **30,** and a plurality of lamps energized under the control of the ESC as configured for a preferred embodiment of the invention. ESC **30** is a programmable body systems computer used to control many vehicle electrical system functions. In the past, many of these functions were controlled by switches, relays and other independently wired and powered devices. ESC **30** is based on a microprocessor **31** which executes programs and which controls switching of a plurality of power FETs used to actuate vehicle exterior lights and the horn. EGC **40** communicates with ESC **30** over an SAE J1939 data link (bus **60**) and CAN controllers **43** (for EGC **40**) and **143** for ESC **30.** EGC **40** includes a microprocessor **41** but is of limited capability and typically characterized by fixed programming. EGC **40** handles switch **45** inputs providing manual control over headlights and enablement of the headlights **16.** Another source of switch inputs may by provided by a switch pack **38** which is connected to microprocessor over an SAE J1708 bus and controller **39** or through switches associated with brake pedals, turn signal levers and other similar systems.

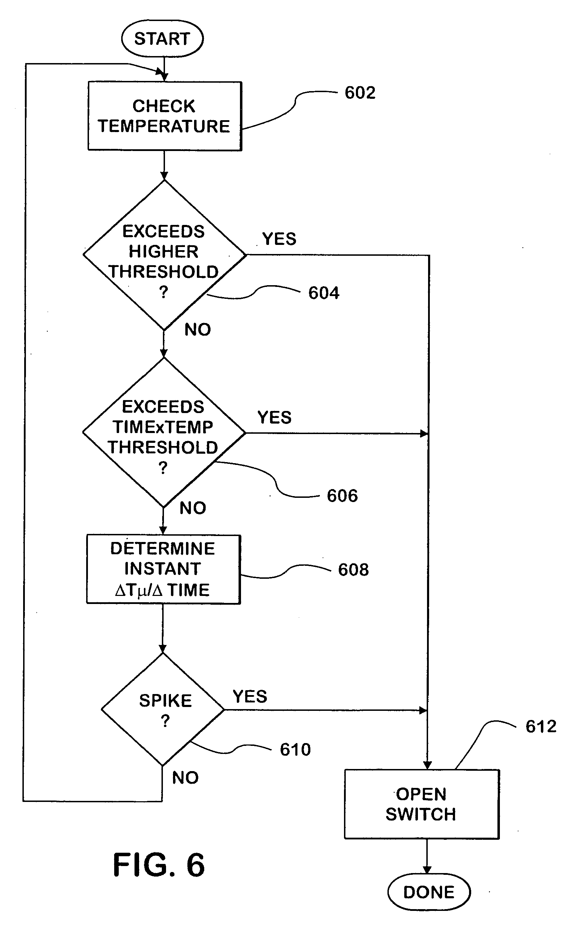

ESC **30** communicates with a sensor controller **240** over private J1939 bus **160,** implemented using a twisted pair of wires and CAN controllers **243** and **343** for sensor controller **240** and ESC **30,** respectively. Sensor controller **240** includes a microprocessor **241** and an analog to digital conversion unit **243.** A plurality of thermal sensors are connected to analog to digital conversion unit **243,** which passes the data to microprocessor **241.** The thermal sensors are positioned as illustrated in **Figs. 5** and **6** to monitor the temperature of electrical power conducting wires connecting various lamps to the FETs of ESC **30.**

Microprocessor **31** can apply activation signals to all of various lamps **37, 38, 61, 48, 43, 64, 45** and **46,** as well as to a horn coil **36.** In the case of headlights **16,** this may also involve pulling high a headlight enable line by instruction to EGC **40.** Microprocessor **31** is connected to provide an activation signal to a horn power FET **51** which in turn drives a horn coil **36.** Another signal line from microprocessor **31** is connected to drive a park light FET **52** which in turn drives park/tail/marker light bulbs **37,** a license plate ID and mirror light bulbs **38.** Yet another signal line from microprocessor **31** drives a low beam FET **53,** which in turn drives filaments in headlight bulbs **41** and **48.** Low beam FET **53** and park light FET **52** further require an input on the headlight enable line to operate. Still another pin on microprocessor **31** controls a high beam FET **54** which drives high beam filaments in bulbs **41** and **42.** Lastly, a set of four pins on microprocessor **31** are used to control the turn signal lights at each corner of the vehicle. Four FETs **55, 56, 57** and **58** are connected to receive the signals and, in turn, to power bulbs **43, 44, 45,** and **46** mounted in turn signal fixtures at the four corners of the vehicle. FETs **55, 56, 57** and **58** can be activated together or separately to provide turn indications and emergency flasher operation.

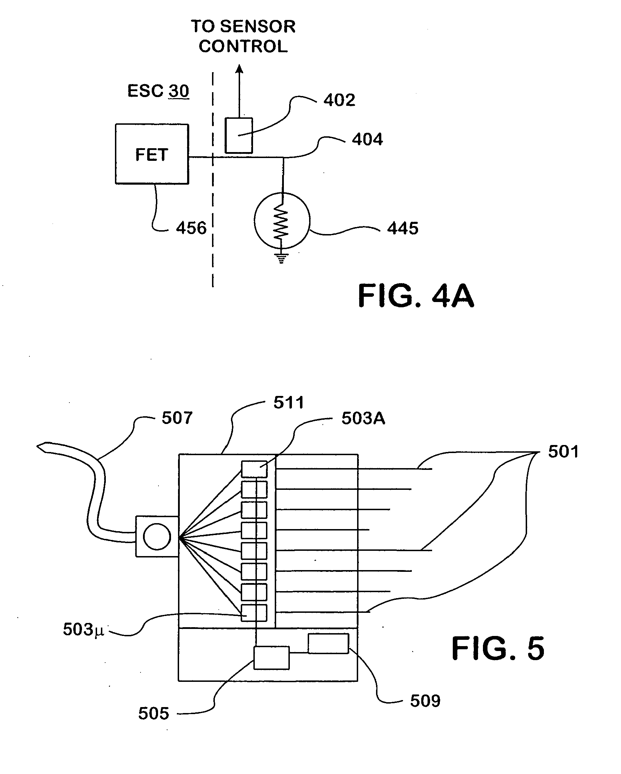

**Fig. 4A** exemplifies one way of providing thermal sensing and circuit breaker functions. FET **456,** intended to be representative of any one of the power switching FETs of ESC **30,** provides electrical power on command of the ESC **30** through a wire **404** connected to a lamp **445.** Disposed adjacent to wire **404** is an infrared thermal sensor **402** which generates a signal proportional to the temperature of wire **404.** The proportional signal is monitored by sensor control **240,** which in turn supplies the data over private bus **160** to ESC **30.** Responsive to the temperature of the wire, ESC **30** can interrupt the circuit including FET **456,** wire **404** and lamp **445** by opening, i.e. interrupting, FET **456.** Here the cutoff signal would be removal of the gate signal to the FET **456.**

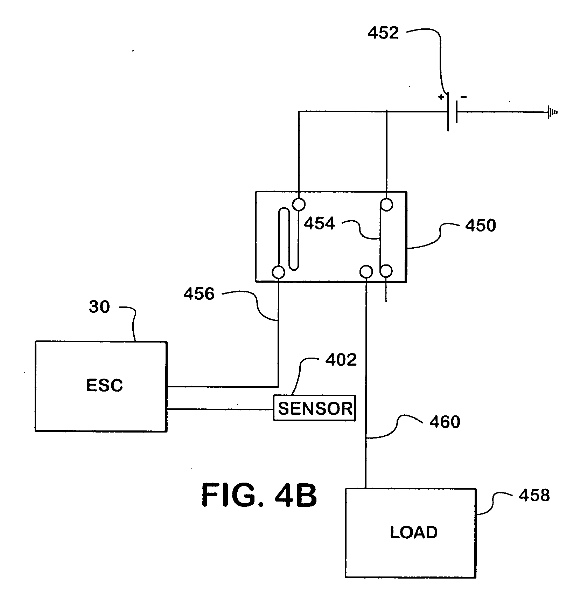

**Fig. 4B** illustrates application of the invention to a relay system. Here a relay **450** provides power from a vehicle battery **452** to a load **458** along a lead **460** between the relay and the load upon closure of relay switch **454.** Relay **480** is controlled by the state of the signal on load **456** connected between a control input of the relay **450** and a relay driver output terminal on ESC **30.** Sensor **402** still operates to sense the temperature of wire **460,** with the output of the sensor being applied to ESC **30.**

It is not necessary to have an CAN bus based electrical control system to implement the invention on all or part of a vehicle. **Fig. 5** exemplifies a modular system providing thermal sensing and circuit interruption functions from a connector interface **511.** Connector interface is supplied power from the vehicle power cable **507** and distributes it to standard vehicle wiring **501** which may be bundled into a vehicle harness. Power is selectively applied to wires **510** by a series of circuit disrupting devices **503A-H** (e.g. relays, FETs, etc.). The temperature of each wire is monitored using an infrared thermal scanner **509** with rotational sweep. The readings taken by scanner **509** are supplied to a circuit interruption microcontroller or programmable logic array **505** which can selectively activate the desired circuit disrupting device **503A-H** by a cutoff signal, the character of which depends upon the type of device. The circuit disrupting devices **503A-H** may function as circuit switch elements under the control of another device. Here the cutoff signal sinks the actuation signal.

**Fig. 6** is a high level flow chart illustrating the three tests implemented by programming of an ESC 30 or of interruption control logic **505.** All of the tests are based on current temperature measurements, which are periodically checked (step **602**). At step **604** the current measured temperature is compared with a first, never exceed threshold. If this temperature is exceeded the circuit is interrupted (step **612**). If the never exceed temperature is not exceeded a time versus temperature analysis is done (step **606**). This may be quite simple, for example, each of the last 12 measurements has exceeded a second, lower threshold. If yes, the circuit is interrupted (step **612**). Finally, short circuits may be indicated by sudden increases in temperature. This may be indicated by the temperature's change over time (step **608**) or by a large delta T over successive periods, even if the never exceed temperature has not yet been broached. Again, a positive indication (step **610**) results in the circuit being opened. Additional circuit interruption protocols may be implemented.

The invention provides a compact circuit protection system largely immune to nuisance trips and providing reset capability.

While the invention is shown in only two of its forms, it is not thus limited but is susceptible to various changes and modifications without departing from the spirit and scope of the invention.

## Claims

1. Apparatus comprising:
an electrical load;
an electrical conductor connected to the electrical load to form a circuit;
a circuit interruption device connected into the electrical conductor and responsive to a cutoff signal for opening the circuit;
an infrared optical sensor disposed with respect to the electrical conductor for measuring the temperature thereof and generating a signal proportional to the temperature; and
a logic element coupled to the receive the proportional signal and generating the cutoff signal for application to the circuit interruption device as a function of the proportional signal.

2. Apparatus as set forth in claim 1, further comprising:
the logic element being programmed to generate the cutoff signal if the proportional signal indicates that the temperature has exceeded a never exceed temperature.

3. Apparatus as set forth in claim 1, further comprising:
the logic element being programmed to generate the cutoff signal in response to the proportional signal indicating a rapid upward change in temperature.

4. Apparatus as set forth in claim 1, further comprising:
the logic element being programmed to generate the cutoff signal in response to the temperature of the electrical conductor exceeding a predetermined threshold for longer that a minimum time period, the predetermined threshold being lower than the never exceed temperature.

5. Apparatus as set forth in claim 1, further comprising:
the logic element being programmed to generate the cutoff signal if the proportional signal indicates that the temperature has exceeded a never exceed temperature, if the proportional signal indicates a rapid upward change in temperature or if the temperature of the electrical conductor exceeds a predetermined threshold for longer that a minimum time period, the predetermined threshold being lower than the never exceed temperature.

6. Apparatus as set forth in claim 5, wherein the electrical circuit is installed on a motor vehicle.

7. Apparatus as set forth in claim 5, further comprising:
the electrical load being a lamp.

8. An electrical power system for a motor vehicle comprising:
a plurality of electrical loads;
electrical conductors connected to the plurality of electrical loads to form a circuits;
circuit interruption devices connected into the electrical conductors and responsive to cutoff signals for opening the respective circuit;
at least a first infrared optical sensor disposed with respect to an electrical conductor for measuring the temperature thereof and generating a signal proportional to the temperature; and
a logic element coupled to the receive the proportional signal and generating the cutoff signal for application to the circuit interruption device as a function of the proportional signal.

9. An electrical power system for a motor vehicle as set forth in claim 8, wherein the logic element is a programmable logic array.

10. An electrical power system for a motor vehicle as set forth in claim 8, wherein the logic element is a body computer.

11. An electrical power system for a motor vehicle as set forth in claim 9, further comprising:
the programmable logic array being programmed to generate the cutoff signal if the proportional signal indicates that the temperature has exceeded a never exceed temperature, if the proportional signal indicates a rapid upward change in temperature and if the temperature of the electrical conductor exceeds a predetermined threshold for longer that a minimum time period, the predetermined threshold being lower than the never exceed temperature.

12. An electrical power system for a motor vehicle as set forth in claim 10, further comprising:
the body computer being programmed to generate the cutoff signal if the proportional signal indicates that the temperature has exceeded a never exceed temperature, if the proportional signal indicates a rapid upward change in temperature and if the temperature of the electrical conductor exceeds a predetermined threshold for longer that a minimum time period, the predetermined threshold being lower than the never exceed temperature.
